# EUROPÄISCHE PATENTANMELDUNG

(11) **EP 3 628 858 A1**
(43) Veröffentlichungstag der Anmeldung: **01.04.2020**
(21) Anmeldenummer: 19200308.5
(22) Anmeldetag: 27.09.2019
(51) Int. Cl.: F03B 3/10, F03B 3/12, H02K 7/18

(54) **WASSERTURBINE**

(30) Priorität: 27.09.2018 DE 102018123985
(71) Anmelder: DIVE Turbinen GmbH & Co. KG, 63916 Amorbach (DE)
(72) Erfinder: FELLA, Günter, 63916 Amorbach (DE)
(74) Vertreter: Waller, Stefan

(57) **Zusammenfassung**

Bei einer Turbine für ein Wasserkraftwerk und/oder Pumpwerk mit einem Läufer (2) mit Schaufeln (4), die gegenüber einer auf der Welle (5) des Läufers (2) senkrecht stehenden Bezugslinie um einen Winkel in Strömungsrichtung des Wassers geneigt sind, einer Nabe (3) des Läufers (2), die sich in Strömungsrichtung des Wassers verjüngt, einem Turbinenrohr (12), in dem der Läufer (2) angeordnet ist und das sich ebenfalls in Strömungsrichtung des Wassers verjüngt, und mit einem vor dem Läufer (2) angeordneten Leitschaufelkranz (14) mit verstellbaren Leitschaufeln (15), sind die Schaufeln (4) auf dem Läufer (2) feststehend angeordnet und kann eine mit dem Läufer (2) verbundene elektrische Maschine (6) als Generator und/oder Motor durch eine Regelungselektronik drehzahlvariabel betrieben werden, um durch Läuferdrehzahl zusammen mit der Stellung der Leitschaufeln (15) den Betrieb der Turbine (1) zu regeln.

## Beschreibung

Die Erfindung betrifft eine Turbine für ein Wasserkraftwerk oder Pumpwerk nach dem Oberbegriff des Patentanspruchs 1.

Bei Wasserkraftwerken kommt als Turbine auch bei mittleren Fallhöhen, beispielsweise einem Bereich von ca. 15 m bis ca. 125 m Fallhöhe, oftmals eine Francis-Turbine zum Einsatz. Die Francis-Turbine weist dabei einen Läufer auf, in den das Wasser über im Regelfall eine Spirale und einen verstellbaren Leitschaufelkranz radial eintritt und diesen Läufer axial verlässt. Dadurch teilen sich die auf den Läufer durch den statischen und dynamischen Wasserdruck wirkenden Kräfte in einen radialen und axialen Anteil auf. Durch eine entsprechende Auslegung kann auch bei größeren Fallhöhen und den hier relevanten mittleren Fallhöhen durch die Gestaltung der Schaufeln die Axialkraft begrenzt werden. Dies ermöglicht eine zuverlässige und vernünftig dimensionierte Lagerung der Welle des Läufers.

Die Anpassung an unterschiedliche Betriebsbedingungen erfolgt durch Verstellung bzw. Verdrehung der Leitschaufeln des Leitschaufelkranzes. Nachteilig an diesem Stand der Technik ist jedoch, dass der Teillastwirkungsgrad sehr schnell abfällt bei weniger als 50 % der Nennwassermenge bis keinerlei Leistung mehr erbracht wird. Bei weniger als 30 % Öffnung der Leitschaufeln kann es sogar zu einer Leistungsaufnahme des Läufers kommen.

Häufig wird daher eine Aufteilung auf zwei Francis-Turbinen vorgenommen mit einem jeweiligen Leistungsanteil von 40 % zu 60 %, um bei stark schwankenden Wassermengen den Wirkungsgrad optimieren zu können. Dies ist jedoch aufwendig und teuer.

Durch Drehrichtungsumkehr kann eine Francis-Turbine auch als Pumpe eingesetzt werden, beispielsweise in einem Pumpspeicherkraftwerk.

Eine weitere, im Stand der Technik umfangreich bekannte Turbinenbauart ist die Kaplan-Turbine. Diese weist verstellbare Schaufeln des Läufers auf, der von dem Wasser axial durchströmt wird. Im Regelfall ist ab gewissen Fallhöhen stets ein Leitschaufelwerk vor dem Läufer vorgesehen, das radial oder axial durchströmt wird. Die Turbine kann daher durch die Einstellung der Leitschaufeln wie auch der Schaufeln des Läufers für einen weiten Betriebsbereich optimiert werden und mit großen Schwankungen der Wassermenge betrieben werden. Ebenso ist auch hier durch die Umkehrung der Laufrichtung auf einfache Art und Weise ein Pumpbetrieb umsetzbar.

Nachteilig an der Kaplan-Turbine nach dem Stand der Technik ist jedoch die mit zunehmender Fallhöhe ebenfalls zunehmende axiale Last des Läufers. Da der Läufer rein axial durchströmt wird muss die Lagerung des Läufers alle mit zunehmender Fallhöhe steigenden Kräfte aufnehmen. Darüber hinaus werden auch die Stellelemente der Schaufeln des Läufers durch die Kräfte belastet, können jedoch nur im Rahmen des in der Nabe des Läufers vorhandenen Bauraums dimensioniert werden.

Um die zuvor genannten Nachteile zu vermeiden, wurden Diagonalturbinen als Übergangsform zwischen Francis-Turbine und Kaplan-Turbine entwickelt, insbesondere bekannt als Deriaz-Turbine. Bei einer solchen Diagonalturbine wird ein Läufer verwendet, dessen Schaufeln bzw. Schaufelachsen in Bezug auf die Welle des Läufers einen Winkel aufweisen, beispielsweise 45°. Die Nabe des Läufers bietet durch die diagonale Führung des Wassers ein größeres Bauvolumen, um eine Verstellung der Schaufeln des Läufers unterzubringen. Daher kann mit einem Leitschaufelkranz in der Wasserzuführung kombiniert mit den verstellbaren Schaufeln des Läufers bei der Diagonalturbine der Wirkungsgrad über einen weiten Bereich optimiert werden. Zugleich ergibt sich eine Kräftezerlegung wie bei der Francis-Turbine mit sich aufhebenden radialen Anteilen und kann durch die Wahl eines geeigneten Winkels die axiale Kraft auf die Läuferwelle begrenzt werden. Auch eine solche Diagonalturbine kann durch Laufrichtungsumkehr als Pumpe eingesetzt werden.

Nachteilig an diesem Stand der Technik ist jedoch, dass ein Turbinenrohr, in dem der Läufer der Diagonalturbine sitzt, aus Sicht der Läuferwelle nach außen gewölbt geformt sein muss, somit konvex. Dies muss zumindest im Bereich der Schaufeln des Läufers der Fall sein. Wenn kein unzulässig großer Laufspalte entstehen soll, müssen die verdrehbaren Schaufeln an ihrem Außenrand an eine Torusfläche anstoßen. Dies ist strömungstechnisch ungünstig. Ebenso erfordert die Nabe eine entsprechend nach außen gewölbte Fläche, die bevorzugt über den größten Bereich ebenfalls torusförmig, bzw. mit einem Radius im Querschnitt gestaltet ist.

Weiterhin ist nachteilig, dass die Stellelemente für die Schaufeln des Läufers zu einem aufwändigen und teuren Aufbau führen. Darüber hinaus werden die Stellelemente durch die Wasserkräfte stark belastet.

Es ist bekannt, eine Kaplan-Turbine mit festen Schaufeln des Läufers und nur einem verstellbaren Leitschaufelkranz auszuführen. In diesem Fall erfolgt eine drehzahlvariable Regelung des Läufers durch Leistungselektronik. Auch dadurch kann ohne verstellbare Schaufeln über einen weiten Betriebsbereich der Wirkungsgrad optimiert werden. Ein Beispiel für eine solche Ausführungsform ist aus der DE 10 2006 043 946 A1 bekannt, die unter dem Handelsnamen "DIVE" vertrieben wird.

Der vorliegenden Erfindung liegt die Aufgabe zugrunde, eine Turbine für ein Wasserkraftwerk und/oder Pumpwerk zur Verfügung zu stellen, die die zuvor genannten Nachteile vermeidet und bei mittleren Fallhöhen einen optimierten Wirkungsgrad über einen weiten Arbeitsbereich bietet und zugleich einfach und kostengünstig im Aufbau ist.

Diese Aufgabe wird durch eine Turbine mit den Merkmalen des unabhängigen Patentanspruchs 1 gelöst. Vorteilhafte Weiterbildungen der Erfindung sind in den Unteransprüchen angegeben.

Die Aufgabe wird dadurch gelöst, dass bei einer Turbine für ein Wasserkraftwerk und/oder Pumpwerk mit einem Läufer mit Schaufeln, die gegenüber einer auf der Welle des Läufers senkrecht stehenden Bezugslinie um einen Winkel in Strömungsrichtung des Wassers geneigt sind, einer Nabe des Läufers, die sich in Strömungsrichtung des Wassers verjüngt, einem Turbinenrohr, in dem der Läufer angeordnet ist und das sich ebenfalls in Strömungsrichtung des Wassers verjüngt, und mit einem vor dem Läufer angeordneten Leitschaufelkranz mit verstellbaren Leitschaufeln, die Schaufeln auf dem Läufer feststehend angeordnet sind und eine mit dem Läufer verbundene elektrische Maschine als Generator und/oder Motor durch eine Regelungselektronik drehzahlvariabel betrieben werden kann, um durch Läuferdrehzahl zusammen mit der Stellung der Leitschaufeln den Betrieb der Turbine zu regeln.

Diese Ausgestaltung einer Diagonalturbine ergibt einen einfacheren und deutlich kostengünstigeren Aufbau, da keine Stellelemente für verstellbare Schaufeln des Läufers erforderlich sind. Durch die Regelung der Drehzahl der elektrischen Maschine kann sowohl in einem Pumpbetrieb, wie auch in einen Betrieb als Kraftwerksturbine über einen weiten Bereich an Durchflussmengen ein optimaler Wirkungsgrad erreicht werden. Es ist auch möglich, relativ kleine Diagonalturbinen auszuführen, da keine Mindestgröße der Nabe vorliegen muss, um die Stellelemente für eine Schaufelverstellung vorzusehen. Vorteilhaft können auch Gewässer mit stark schwankender Wasserführung mit nur einer Turbine genutzt werden und es müssen beispielsweise nicht, wie zuvor geschildert, zwei Turbinen vorgesehen werden. Insbesondere jedoch kann durch den Winkel der Schaufeln gegenüber der Bezugslinie in der Auslegung die maximale axiale Kraft festgelegt werden. Dadurch kann die hier beschriebene Turbine auch bei mittleren Fallhöhen zum Einsatz kommen, da eine zuverlässige und langlebige Lagerung der Welle des Läufers erreicht werden kann.

Vorteilhaft ist das Turbinenrohr im Bereich der Schaufeln konkav geformt, somit in Richtung auf die Welle des Läufers zusammengezogen.

Bei der bekannten, bisherigen Ausführungsform von Diagonalturbinen muss eine umlaufende, ringförmige Fläche vorgesehen werden, die in ihrem Querschnitt einen Kreisabschnitt bildet. Dieser Ausschnitt eines Torus ist nach dem Stand der Technik erforderlich, um einen geringen Spalt der verstellbaren Schaufeln in allen Stellungen des Stellelements zu ermöglichen. Vorteilhaft kann nun völlig unabhängig nicht nur eine solche konvexe, nach außen gewölbte Fläche vorgesehen werden, sondern auch eine im Gegenteil nach innen gekrümmte, konkave Fläche. Dies ist hydrodynamisch günstiger und kann insbesondere zu Verengungseffekten wie einem Düseneffekt genutzt werden.

In einer bevorzugten Ausführungsform ist das Turbinenrohr im Bereich der Schaufeln gerade geformt, bildet somit einen Konusabschnitt.

Ein solcher Konusabschnitt als Teil eines Kegels bildet in der Abwicklung eine ebene Fläche. Daher ist nur eine Krümmung in einer Ebene erforderlich. Eventuelle hydrodynamische Vorteile sind gegenüber der kostengünstigen Fertigungsmöglichkeit eines solchen Konusabschnitts relativ gering. Die erfindungsgemäße Turbine kann daher mit einem solchen Konusabschnitt besonders genau und kostengünstig hergestellt werden.

Bei einer weiteren, vorteilhaften Ausführungsform weist die Nabe des Läufers einen Konusabschnitt auf, insbesondere im Bereich der Schaufeln.

Auch hier kann die Nabe besonders kostengünstig hergestellt werden. Prinzipiell sind für die Nabe jedoch alle weiteren denkbaren Wölbungen umsetzbar, wenn diese hydrodynamisch sinnvoll ist. Sie kann alternativ sowohl konkav, als auch konvex gestaltet werden.

Für einen Betrieb als Pumpe können angepasste hintere Kanten der Schaufeln des Läufers und des Leitschaufelkranzes vorgesehen sein.

Ein Pumpbetrieb der hier beschriebenen Turbine ist jederzeit möglich, wenn die elektrische Maschine nicht als Generator betrieben wird sondern als Elektromotor und die Drehrichtung umgekehrt wird. Dabei erfolgt die Anströmung des Wassers auf die Schaufeln wie auch die Leitschaufeln in umgekehrter Richtung. Es ist daher erforderlich bzw. sinnvoll, die im Generatorbetrieb hinteren Kanten der Schaufeln anzupassen, insbesondere mit einem abgerundeten Profil zu versehen. Weiterhin kann es vorteilhaft sein, bei den Leitschaufeln die Drehachsen angepasst zu positionieren, insbesondere weiter in der Mitte der Leitschaufel, um im Pumpbetrieb günstigere Kraft- und Hebelverhältnisse zu haben.

Der Winkel zwischen Bezugslinie und Schaufeln kann zwischen 10° und 70°, bevorzugt zwischen 30° und 60°, ganz bevorzugt zwischen 40° und 50° betragen.

Die hier beschriebene Turbine ist für mittlere Fallhöhen besonders geeignet und der Winkel kann bei diesen mittleren Fallhöhen zwischen ca. 15 m und 125 m abhängig von dieser in einem weiten Bereich gewählt werden, um Axialkräfte zu begrenzen. Grundsätzlich ist der gesamte Bereich denkbar, der sich außerhalb der senkrecht stehenden Schaufeln einer Kaplan-Turbine befindet und andererseits außerhalb der im oberen Anströmungsbereich fast achsparallel liegenden Schaufeln einer Francis-Turbine. Die Richtung einer Schaufel kann dabei auf verschiedene Art und Weise definiert werden. Eine denkbare Definition ist durch die Schaufel radial nach außen eine Mittellinie zu legen, bei der die Hälfte der auf die Schaufel wirkenden Kraft jeweils rechts und links dieser Linie liegt, entsprechend ähnlichen Definitionen bei Flügeln und Luftpropellern.

Vorteilhaft weist der Läufer mindestens acht Schaufeln auf, insbesondere 10.

Mit der Fallhöhe wächst der Bedarf für eine größere Schaufelzahl. Es gibt Empfehlungen in denen einer bestimmten Fallhöhe eine bestimmte Schaufelzahl zugeordnet wird. Bei verstellbaren Schaufeln gibt es als logische Folge eine Obergrenze für die Anzahl wegen des Verstellmechanismuses. Im Umkehrschluss gibt es eine Untergrenze, weil bei geringer Anzahl die Schaufel immer länger wird und diese nicht ohne Einschränkung verdrehbar ist. Durch den Wegfall der Anforderung an kugelige Berührflächen ist in jeder Hinsicht ein Freiheitsgrad geschaffen die Flügel in der Zahl, der Form und der Länge zu optimieren.

In einer weiteren Ausführungsform bildet der Läufer mit den Schaufeln ein geschlossenes Laufrad, bei dem ein sich mitdrehender Wandabschnitt des Turbinenrohrs mit den Schaufeln radial außen fest verbunden ist.

Dadurch ergeben sich keine Leckage- und Kavitationsprobleme wie sie ansonsten unumgänglich mit dem Spalt zwischen den Schaufeln des Läufers und dem Turbinenrohr verbunden sind. Das Turbinenrohr kann dabei im Bereich dieses Wandabschnitts von einer weiteren Hülle vollständig wasserdicht umschlossen sein, sodass keine Dichtungen erforderlich sind.

Die elektrische Maschine kann mit einem Frequenzumrichter verbunden sein, der durch die Regelungselektronik gesteuert wird.

Vorteilhaft ist die elektrische Maschine eine asynchrone Maschine, eine fremderregte Synchronmaschine oder eine permanent erregte Synchronmaschine.

Es kann in einem Durchflussbereich von 85 % bis 100 % der Nennwassermenge ein Betrieb mit fester Drehzahl erfolgen.

In diesem Bereich liegt auch bei einer festen Drehzahl ein sehr hoher Wirkungsgrad vor. Es kann daher eine weitere Verbesserung des Gesamtwirkungsgrades erreicht werden, wenn ein Frequenzumrichter eventuell überbrückt wird.

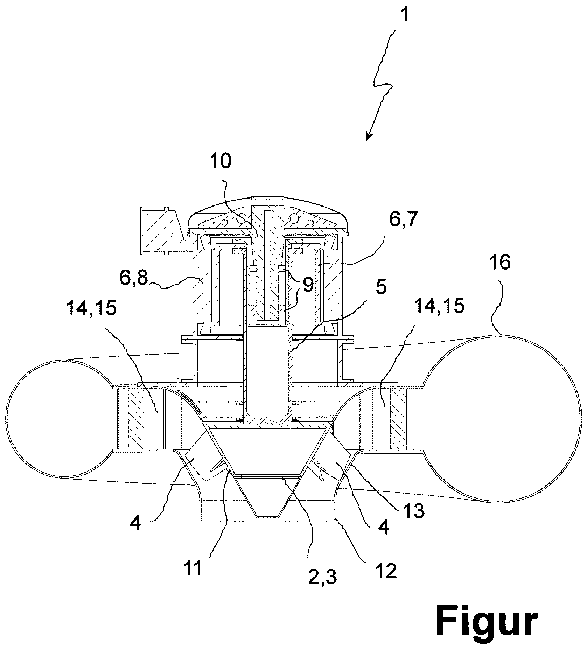

Weitere Vorteile und Einzelheiten der Erfindung werden anhand des in der schematischen Figur dargestellten Ausführungsbeispiels näher erläutert. Hierbei zeigt die Figur im Schnitt eine erfindungsgemäße Turbine 1 im Querschnitt. Ein Läufer 2 mit einer Nabe 3 trägt Schaufeln 4. Der Läufer 2 ist mit einer Welle 5 verbunden, an der die elektrische Maschine 6 mit einem Rotor 7 und einem Stator 8 angeordnet ist. Die Welle 5 ist über Lager 9 an einem Königszapfen 10 gelagert. Die Nabe 3 bildet dabei einen Konusabschnitt 11, der einen Abschnitt eines Kegels darstellt. Dieser Konusabschnitt 11 lässt sich vorteilhaft und kostengünstig herstellen.

Ebenso weist ein Turbinenrohr 12, in dem der Läufer 2 angeordnet ist einen Konusabschnitt 13 auf, der ebenfalls kostengünstig hergestellt werden kann. Ein Leitschaufelkranz 14 mit Leitschaufeln 15 ist ringförmig außen von einer Einlaufspirale 16 umgeben, die das Triebwasser zuführt.

## Patentansprüche

1. Turbine für ein Wasserkraftwerk und/oder Pumpwerk mit einem Läufer (2) mit Schaufeln (4), die gegenüber einer auf der Welle (5) des Läufers (2) senkrecht stehenden Bezugslinie um einen Winkel in Strömungsrichtung des Wassers geneigt sind, einer Nabe (3) des Läufers (2), die sich in Strömungsrichtung des Wassers verjüngt, einem Turbinenrohr (12), in dem der Läufer (2) angeordnet ist und das sich ebenfalls in Strömungsrichtung des Wassers verjüngt, und mit einem vor dem Läufer (2) angeordneten Leitschaufelkranz (14) mit verstellbaren Leitschaufeln (15),
**dadurch gekennzeichnet,**
**dass** die Schaufeln (4) auf dem Läufer (2) feststehend angeordnet sind und eine mit dem Läufer (2) verbundene elektrische Maschine (6) als Generator und/oder Motor durch eine Regelungselektronik drehzahlvariabel betrieben werden kann, um durch Läuferdrehzahl zusammen mit der Stellung der Leitschaufeln (15) den Betrieb der Turbine (1) zu regeln.

2. Turbine nach Anspruch 1,
**dadurch gekennzeichnet,**
**dass** das Turbinenrohr (12) im Bereich der Schaufeln (4) konkav geformt ist, somit in Richtung auf die Welle (5) des Läufers (2) zusammengezogen.

3. Turbine nach Anspruch 1,
**dadurch gekennzeichnet,**
**dass** das Turbinenrohr (12) im Bereich der Schaufeln (4) gerade geformt ist, somit einen Konusabschnitt (13) bildet.

4. Turbine nach einem der vorhergehenden Ansprüche,
**dadurch gekennzeichnet,**
**dass** die Nabe (3) des Läufers (2) einen Konusabschnitt (11) aufweist, insbesondere im Bereich der Schaufeln (4).

5. Turbine nach einem der vorhergehenden Ansprüche,
**dadurch gekennzeichnet,**
**dass** für einen Betrieb als Pumpe angepasste hintere Kanten der Schaufeln (4,15) des Läufer (2) und des Leitschaufelkranzes (14) vorgesehen sind.

6. Turbine nach einem der vorhergehenden Ansprüche,
**dadurch gekennzeichnet,**
**dass** der Winkel zwischen Bezugslinie und Schaufeln (4) zwischen 10° und 70°, bevorzugt zwischen 30° und 60°, ganz bevorzugt zwischen 40° und 50° beträgt.

7. Turbine nach einem der vorhergehenden Ansprüche,
**dadurch gekennzeichnet,**
**dass** der Läufer (2) mindestens acht Schaufeln (4) aufweist, insbesondere 10 aufweist.

8. Turbine nach einem der vorhergehenden Ansprüche,
**dadurch gekennzeichnet,**
**dass** der Läufer (2) mit den Schaufeln (4) ein geschlossenes Laufrad bildet, bei dem ein sich mitdrehender Wandabschnitt des Turbinenrohr (12) mit den Schaufeln (4) radial außen fest verbunden ist.

9. Turbine nach einem der vorhergehenden Ansprüche,
**dadurch gekennzeichnet,**
**dass** die elektrische Maschine (6) mit einem Frequenzumrichter verbunden ist, der durch die Regelungselektronik gesteuert wird.

10. Turbine nach einem der vorhergehenden Ansprüche,
**dadurch gekennzeichnet,**
**dass** die elektrische Maschine (6) eine asynchrone Maschine, eine fremderregte Synchronmaschine oder eine permanent erregte Synchronmaschine ist.

11. Turbine nach einem der vorhergehenden Ansprüche,
**dadurch gekennzeichnet,**
**dass** in einem Durchflussbereich von 85 % bis 100 % der Nennwassermenge ein Betrieb mit fester Drehzahl erfolgen kann.
